(19) Europäisches Patentamt

European Patent Office

Office européen des brevets

(11) **EP 0 801 341 B1**

(12) **EUROPÄISCHE PATENTSCHRIFT**

(45) Veröffentlichungstag und Bekanntmachung des Hinweises auf die Patenterteilung:
**06.10.2004   Patentblatt 2004/41**

(51) Int Cl.[7]: **G05B 19/41**, G05B 19/404

(21) Anmeldenummer: **97105134.7**

(22) Anmeldetag: **26.03.1997**

(54) **Drahterosionsmaschine und Verfahren zu deren Betrieb**

Wire electro-discharge machine and operation method therefor

Machine d'électro-érosion à fil et méthode pour son fonctionnnement

(84) Benannte Vertragsstaaten:
**CH DE ES FR GB IT LI NL**

(30) Priorität: **10.04.1996   DE 19614134**

(43) Veröffentlichungstag der Anmeldung:
**15.10.1997   Patentblatt 1997/42**

(73) Patentinhaber: **AGIE SA**
**6616 Losone (CH)**

(72) Erfinder: **Beltrami, Ivano, Dr.**
**6654 Cavigliano (CH)**

(74) Vertreter:
**von Samson-Himmelstjerna, Friedrich R.,**
**Dipl.-Phys. et al**
**SAMSON & PARTNER**
**Widenmayerstrasse 5**
**80538 München (DE)**

(56) Entgegenhaltungen:
EP-A- 0 312 056           EP-B- 0 521 193
DE-A- 2 502 288           DE-A- 2 748 454
DE-A- 2 826 270           DE-A- 2 826 489
DE-A- 3 609 709

**Beschreibung**

Die Erfindung betrifft eine Drahterosionsmaschine mit Einrichtungen zur Kompensation des sogenannten Schleppfehlers, gemäß dem Oberbegriff des Patentanspruchs 1, sowie ein Verfahren zur Kompensation des Schleppfehlers gemäß dem Oberbegriff des Anspruchs 13. Eine Maschine bzw. ein Verfahren dieser allgemeinen Gattung ist aus der EP 0 068 027 B1 bekannt.

Funken- oder Elektroerosion ist eine Erscheinung, die bei elektrischer Entladung zwischen zwei Elektroden über ein Dielektrikum auftritt und sich als Materialabtragung an der einen Elektrode äußert. Dieses Prinzip wird seit längerer Zeit und in zunehmendem Maße zur Metallbearbeitung angewandt, da sich hiermit sehr präzise Konturen herstellen lassen. In entsprechenden Werkzeugmaschinen, den sogenannten Funkenerosionsmaschinen, wird die eine Elektrode durch das Werkstück und die andere durch ein Werkzeug - eine sogenannte Werkzeugelektrode - gebildet. Zur Herstellung der jeweils gewünschten Kontur wird für eine entsprechende, in der Regel numerisch gesteuerte Relativbewegung zwischen dem Werkstück und der Werkzeugelektrode gesorgt. Als Dielektrikum zwischen den beiden Elektroden dient ein Spülmittel, üblicherweise Wasser, das die Erodierzone unter einem bestimmten einstellbaren Spüldruck umströmt.

Bei einer Drahterosionsmaschine wird als Werkzeugelektrode ein Schneiddraht verwendet, der ständig von einem Drahtvorrat abgespult, über eine erste Drahtführung oberhalb des Werkstückes zur Erodierzone läuft und von dort über eine zweite Drahtführung unterhalb des Werkstückes in eine Ablage oder zur Entsorgung gezogen wird. Zum Schneiden einer vorgegebenen Kontur in das Werkstück bedarf es einer exakt gesteuerten Relativbewegung zwischen dem Schneiddraht und dem Werkstück, die in der Regel durch numerisch gesteuerte Bewegung des Werkstükkes und/oder der die Drahtführungen tragenden Führungsköpfe realisiert wird. Diese Relativbewegung muß gewährleisten, daß sich die Erodierzone im Werkstück entlang einer Bahn - der Umrißkurve - bewegt, die möglichst genau der herzustellenden Kontur folgt.

Im Idealfall, wenn der Schneiddraht zwischen oberer und unterer Drahtführung exakt geradlinig verliefe, wäre beispielsweise im Falle eines zylindrischen Schnittes die Relativbewegung zwischen Drahtführungsköpfen und Werkstück genau der erwähnten Umrißkurve anzugleichen. Obwohl der Draht durch Antriebs- und Bremsrollen in den Führungsköpfen mechanisch vorgespannt ist, ist es unvermeidbar, daß sich der Schneiddraht entgegen der Schneidrichtung ausbaucht, und zwar insbesondere infolge des Spül- und des Erosionsdrucks in der Erodierzone. Diese Bauchung verursacht Probleme bei Richtungsänderungen der zu schneidenden Kontur am Werkstück, hauptsächlich bei scharfen Krümmungen oder Ecken der Umrißkurve, wo sich dann der sogenannte "Schleppfehler" manifestiert, der die Konturkrümmung abzuflachen und die Ecken abzurunden trachtet. Diese Erscheinung ist grob vergleichbar mit dem Fehler zwischen den Spuren eines schleppenden und eines abgeschleppten Fahrzeuges, der beim Durchfahren enger Kurven zu beobachten ist.

Es sind verschiedene Maßnahmen bekannt, um den Schleppfehler zu kompensieren. So offenbaren z.B. die US-4 546 227 und die oben genannte EP-0 068 027 B1 verschiedene Verfahren, bei denen die Bauchung des Drahtes während einer Unterbrechung des Erosionsverfahrens gemessen wird und aus den betreffenden Meßwerten Steuergrößen berechnet werden, welche die og. Relativbewegung im Sinne einer Minimierung der Auswirkungen des Schleppfehlers beeinflussen. Die US-4 546 227 offenbart ein Verfahren, bei welchem zum Schneiden einer Ecke die Relativbewegung zwischen dem Schneiddraht und dem Werkstück vorübergehend angehalten und der Schleppfehler gemessen wird. Die EP-0 068 027 B1 zeigt ein Verfahren, bei welchem aus der gemessenen Drahtbauchung zwei Korrekturwerte berechnet werden, wobei der eine sich auf die tangentiale und der andere sich auf die radiale Komponente des Schleppfehlers an einer Krümmung bezieht und die dazu verwendet werden, die entsprechend der zu schneidenden Kontur eingespeicherte Relativbewegung des Vorschubsystems im Sinne einer Kompensation des Schleppfehlers zu korrigieren. Das heißt, die Bahn der durch das Vorschubsystem tatsächlich herbeigeführten Relativbewegung zwischen den Drahtführungsköpfen und dem Werkstück wird abhängig von Drahtlage-Meßwerten gegenüber der zu schneidenden Umrißkurve versetzt.

Die beiden erwähnten Verfahren haben jeweils verschiedene Nachteile, so daß sie nicht universell einsetzbar sind. So ist z.B. das oben genannte erste Verfahren, das eine Eckenstrategie durch die Reduktion der Erosionsparameter vollführt, sehr zeitaufwendig. Abhängig vom Radienanteil des Werkstückes wird hierbei die durchschnittliche Schnittrate verringert. So wird z.B. bei einem Werkstück mit 15% Radienanteil nur die Hälfte der maximalen Schnittrate erreicht. Bei dem oben genannten zweiten Verfahren ist wegen der fortwährenden Schleppfehlerkorrektur keine Verringerung der Erodiergeschwindigkeit notwendig, so daß die maximale Schnittrate mit der durchschnittlichen gleichzusetzen ist.

Andererseits ist die Zerlegung des Schleppfehlervektors auf einem Kreisbogen in die tangentiale und in die radiale Komponente statisch und unabhängig von der Richtung des Schleppfehlers im Ursprung des Bahnelementes. Bei Rückkehr auf einen geraden Schnitt sowie beim Übergang von einem geraden Schnitt auf einen anderen geraden Schnitt ist keine Korrektur mehr vorgesehen. Speziell bei kleinen Radien und großen Richtungsänderungen versagt diese statische Berechnung.

Aus der EP 0 312 056 ist eine "sensorgestützte" Meßeinrichtung zur Messung der Auslenkung der Drahtelektrode bekannt. Damit kann die relative Position zwischen den Führungsköpfen der Drahtelektrode und dem Werkstück so korrigiert werden, daß durch die Drahtauslenkung bedingte Bearbeitungsfehler vermieden werden. Diese Methode weist einige Einschränkungen auf, die vom Operateur berücksichtigt werden müssen. Besonders bei schwierigen Arbeitsbedingungen, wenn z.B. die zu schneidende Kontur zu nah an die Werkstückkante kommt oder zu nahe Schnittspuren enthält, kann die Messung der Auslenkung instabil werden.

Im Artikel von KÖNIG, W., HENSGEN, G.: "Konturgenauigkeit beim funkenerosiven Schneiden", Industrieanzeiger, Nr. 104 vom 29.12.1982, 104. Jg., S. 39-41, wird vorgeschlagen, die programmierte Bahn unter Berücksichtigung der elektrischen Größen, nämlich Erosionsstrom und Erosionsspannung, im Bereich scharfer Ecken bzw. kleiner Radien zu modifizieren, um den Schleppfehler zu verringern. In diesem Artikel wird jedoch lediglich ein Zusammenhang zwischen einer Veränderung der elektrischen Größen und einem frontalen Drahtversatz angedeutet. Der Artikel gibt jedoch keine Lösung für eine Bahnkorrektur an.

Die DE-A-2748454 zeigt eine Korrekturmaßnahme, die Bahnelektrodenführungsköpfe im Hinblick auf den Schleppfehler zu korrigieren. Hierzu wird die Richtung der Bahnkorrektur aus den momentanen Geometriedaten der Sollkurve im Werkstück derart abgeleitet, daß die Tangente an den zu schneidenden Punkt gelegt wird, und die Elektrodenführungsköpfe entlang der Tangente in Bearbeitungsrichtung um einen Abstand d verschoben werden. Der Abstand d wird als Funktion der mittleren Verformung des Drahtes mit Bezug auf die Höhe des zu bearbeitenden Werkstücks gewählt.

Die DE-A 2826489 zeigt ein Schleppfehlerkorrekturverfahren zum Korrigieren des durch den Schleppfehler hervorgerufenen Konturfehlers beim Schneiden von Ecken. Hierbei wird die Drahtelektrode in dem Abschnitt vor einer Ecke, an der die Richtungsänderung größer als ein vorbestimmter Winkel ist, mehrfach in der zuvor geschnittenen Bahn vorund zurückgefahren, bis davon ausgegangen werden kann, daß der Schleppfehler auf Null zurückgegangen ist. Dann wird erst mit dem Schneiden des nächsten, der Ecke folgenden Abschnitts begonnen.

Der Erfindung liegt das technische Problem zugrunde, bei Drahterosionsmaschinen die Schleppfehlerkorrektur zu verbessern.

Dieses Problem wird erfindungsgemäß durch die in den Patentansprüchen 1 und 13 beschriebenen Merkmale gelöst.

Nach Anspruch 1 ist eine Drahterosionsmaschine vorgesehen mit einem zwischen zwei Führungsköpfen geführten, als Erodierelektrode wirkenden Schneiddraht, einer Stelleinrichtung zum Durchführen von Bewegungen der Führungsköpfe, ggf. eines Werkstücks, entlang jeweils einer Drahtführungsbahn derart, daß eine Kontur in das Werkstück schneidbar ist, und einer ersten Einrichtung, die derart ausgelegt ist, daß sie den durch die Bauchung des Schneiddrahtes entstehenden, tatsächlichen Schleppfehler kompensiert durch Korrigieren der jeweiligen Drahtführungsbahn gegenüber einer durch wenigstens eine Umrißkurve dargestellten, zu schneidenden Kontur, wobei die erste Einrichtung derart ausgelegt ist, daß sie zum Korrigieren der jeweiligen Drahtführungsbahn einen Schleppfehlerkorrekturvektor berechnet, wobei sie dessen Betrag aus den momentanen der Erosion zugrundeliegenden Erosionsparametern und dessen Richtung als Winkel zwischen dem berechnetem Schleppfehlerkorrekturvektor und der Tangente an einen Punkt der Umrißkurve aus den momentanen der Erosion zugrundeliegenden Erosionsparametern und/oder aus der Geometrie der zu schneidenden Kontur berechnet.

Nach Anspruch 13 ist ein Verfahren zum Bewegen von Führungsköpfen, ggf. eines Werkstücks, einer Drahterosionsmaschine entlang jeweils einer Drahtführungsbahn, wobei mittels eines zwischen den Führungsköpfen verlaufenden Schneiddrahtes eine Kontur in das Werkstück geschnitten wird und der durch die Bauchung des Schneiddrahtes entstehende, tatsächliche Schleppfehler kompensiert wird, indem die jeweilige Drahtführungsbahn gegenüber einer durch wenigstens eine Umrißkurve dargestellte, zu schneidende Kontur korrigiert wird, wobei zum Korrigieren der jeweiligen Drahtführungsbahn ein Schleppfehlerkorrekturvektor berechnet wird, wobei dessen Betrag aus den momentanen der Erosion zugrundeliegenden Erosionsparametern und dessen Richtung als Winkel zwischen dem berechneten Schleppfehlerkorrekturvektor und der Tangente an einen Punkt der Umrißkurve aus den momentanen der Erosion zugrundeliegenden Erosionsparametern und/oder aus der Geometrie der zu schneidenden Kontur berechnet wird.

Unter Erosionsparametern sollen hierbei all die Parameter verstanden werden, die den Materialabtrag in dem Erosionsspalt physikalisch beeinflussen.

Der Erfindungsgegenstand ermöglicht eine neue, dynamische "softwaregestützte" Schleppfehlerkorrektur, die eine vollständige und universale Lösung, also unabhängig von den Arbeitsbedingungen, ist.

Vorteilhafte Ausführungsformen und Ausgestaltungen der erfindungsgemäßen Drahterosionsmaschine und des erfindungsgemäßen Verfahrens sind in den Unteransprüchen gekennzeichnet.

Die Erfindung beruht auf der Erkenntnis, daß man den zur Korrektur des tatsächlich auftretenden Schleppfehlers erforderlichen Versatz der durch die Stelleinrichtung der Drahterosionsmaschine abzufahrenden Drahtführungsbahn gegenüber der zu schneidenden Umrißkurve durch Betrag und Richtung eines Schleppfehlerkorrekturvektors darstellen kann und daß sich diese beiden Komponenten aus den momentanen Erosionsparametern und aus der vorbekannten Geometrie der zu schneidenden Kontur berechnen lassen.

Vorzugsweise erfolgt die Berechnung des Vektorbetrages aus dem momentanen Arbeitsstrom und der momentanen Arbeitsspannung und aus dem Momentandruck der den Schneiddraht umströmenden Spülung (dem Spüldruck), während die Vektorrichtung aus dem Winkel berechnet wird, der sich zwischen der Richtung des Schleppfehlers am Ende eines Bahnelementes der Umrißkurve und der Richtung des als nächstes zu schneidenden Bahnelementes der Umrißkurve ergibt. Die hierbei anzuwendenden Rechenformeln enthalten neben den genannten Größen nur solche Parameter, die von fixen Parametern der Maschine und bekannten Parametern des Werkstückes abhängen und experimentell oder aus diesen Parametern rechnerisch vorbestimmt und in Vorbereitung der Werkstückbearbeitung eingegeben werden können, z.B. in die Software für die computerisierte numerische Steuerung (CNC) der Drahterosionsmaschine.

Die erfindungsgemäße erste Einrichtung kann selbständig angewendet werden. Bevorzugt wird sie aber auch gemeinsam mit einer oder mehreren anderen Einrichtungen in die Drahterosionsmaschine eingebaut sein, um sie nur dann zu aktivieren, wenn die anderen Einrichtungen in der augenblicklichen Situation an die Grenze ihrer Einsatzfähigkeit gelangen oder mehr Nachteile als Vorteile bieten. Ferner kann die erste Einrichtung der Unterstützung einer sensorgestützten Meßeinrichtung dienen, wo diese erfahrungsgemäß notwendig ist.

Die Erfindung wird nachstehend anhand der Zeichnung näher erläutert. In der Zeichnung zeigen:

Fig. 1      eine schematische Ansicht des Aufbaus einer Drahterosionsmaschine;

Fig. 2      eine perspektivische Ansicht eines Werkstückes und des Schneiddrahtes während der Bearbeitung;

Fig. 3      die Änderung des Schleppfehlerkorrekturvektors beim Schneiden einer Kante;

Fig. 3a      eine schematische Aufteilung einer zu schneidenden Umrißkurve in Bahnelement und Segmente;

Fig. 3b      Tangenten und Schleppfehlerkorrekturvektoren an einer zu schneidenden Umrißkurve;

Fig. 4      einen typischen Verlauf einer Drahtführungsbahn gegenüber einer zu schneidenden Umrißkurve anhand eines Beispiels;

Fig. 5      ein Blockschaltbild eines den Schleppfehler korrigierenden Steuersystems in einer Drahterosionsmaschine gemäß einer Ausführungsform der Erfindung;

In der nachstehenden Beschreibung wird eine Terminologie verwendet, die der leichteren Lesbarkeit der Beschreibung dient, jedoch nicht einschränkend zu verstehen ist. Beispielsweise beziehen sich Ausdrücke wie "oben" und "unten", "vertikal" usw. auf Drahterosionsmaschinen üblicher Arbeitsaufstellung und Größe sowie auf in üblicher Weise angeordnete Werkstücke. Auch sind die Maßstäbe der Figuren lediglich anschaulich zu verstehen.

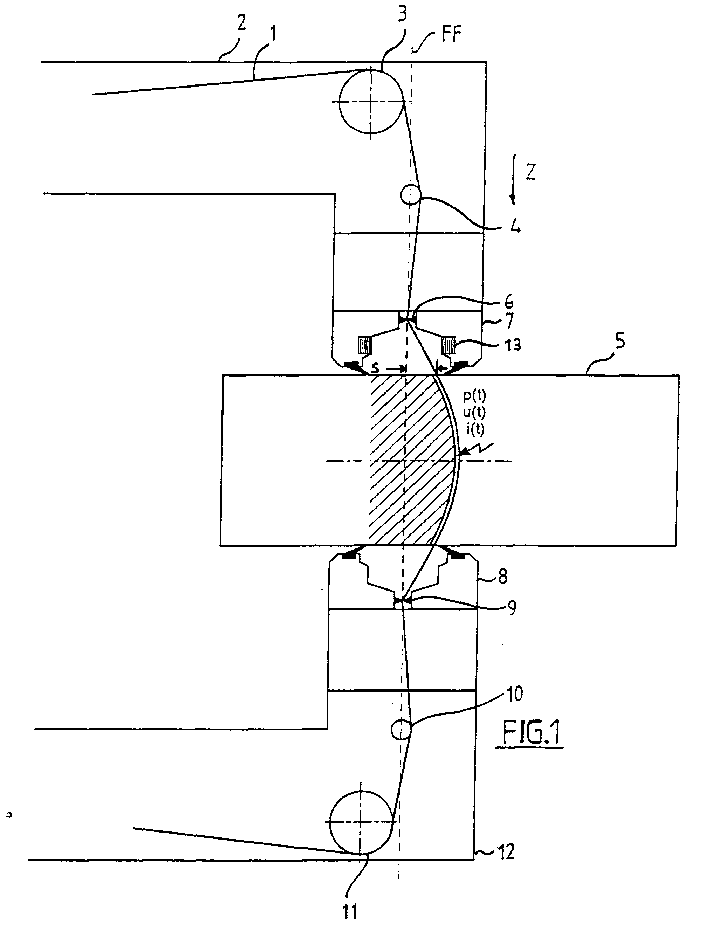

Fig. 1 beschränkt sich auf eine rein schematische Darstellung derjenigen Teile einer Drahterosionsmaschine die zur Erläuterung der Erfindung erwähnenswert sind. Grundelemente wie Spülsystem und Generator sind nicht dargestellt, da sie als selbstverständlich gelten und allgemein bekannt sind.

Ein beim erosiven Schneiden mit elektrischen Impulsen beschickter Erodier- oder Schneiddraht 1 wird in der durch einen Pfeil Z dargestellten Drahttransportrichtung von oben nach unten vorgespult. Der von einer (nicht dargestellten) Vorratsrolle abgespulte Schneiddraht 1 umläuft zunächst einige Umlenkungen eines oberen Maschinenarmes 2, von denen lediglich eine einzelne Umlenkrolle 3 dargestellt ist. Dann umläuft der Schneiddraht 1 eine Stromzuführung 4, die in üblicher Weise zum Anlegen der vom Generator der Maschine abgegebenen elektrischen Impulse dient. Die Stromzuführung 4 sorgt auch für eine gewisse Vorspannung des Schneiddrahtes 1. In Bezug auf die Vorspulrichtung Z ist hinter der Stromzuführung 4 oberhalb eines zu schneidenden Werkstückes 5 eine obere Drahtführung 6 angeordnet, die sich in einem oberen Führungskopf 7 befindet. Als (nicht dargestellte) Alternative können statt einer oberen Drahtführung 6 mehrere obere Drahtführungen vorgesehen sein.

Hinter bzw. unter dem Werkstück 5 liegt ein zweiter Führungskopf 8, in dem eine weitere untere Drahtführung 9 angeordnet ist. Wiederum können als (nicht dargestellte) Alternative statt einer unteren Drahtführung 9 mehrere untere Drahtführungen vorgesehen sein. Nach dem Durchlaufen des Werkstückes 5 durchquert der Schneiddraht 1 zunächst die untere Drahtführung 9, bevor er um eine zur oberen Stromzuführung 4 entsprechende untere Stromzuführung 10 und eine Umlenkrolle 11, die an einem unteren Maschinenarm 12 befestigt ist, einem (nicht dargestellten) Entsorgungsbehälter zugeführt wird. Eine nicht gezeigte Spülvorrichtung sorgt dafür, daß der Schneiddraht 1 im Werkstück 5 ständig von einem Spülmittel unter Druck koaxial umspült wird.

Üblicherweise wird das Werkstück 5 und/oder der untere Führungskopf 8 zweidimensional (in sogenannter X- und Y-Richtung) entlang einer Drahtführungsbahn geführt, um eine bestimmte Kontur aus dem Werkstück 5 zu schneiden. Zum Erzielen eines konischen Schnittes wird gewöhnlich der obere Führungskopf 7 relativ zum unteren Führungskopf 8 bzw. zum Werkstück 5 in U- und V-Richtung geführt. Insbesondere ist bei speziellen Drahterosionsmaschinen der untere Führungskopf 8 nicht beweglich, während das Werkstück 5 und der obere Führungskopf 7 unabhängig voneinander beweglich sind. Das folgende Ausführungsbeispiel beschreibt eine Drahterosionsmaschine mit geführtem oberen und unteren Führungskopf und feststehendem Werkstück. In der Beschreibung des Ausführungsbeispiels sind deshalb andere bekannte Verfahren zum Führen bzw. Schwenken der einzelnen Führungsköpfe 7 und 8, des Werkstücks 5 etc. nicht weiter in Verbindung mit der erfindungsgemäßen Schleppfehlerkorrektur angeführt, was jedoch nicht einschränkend zu verstehen ist, sondern nur der Klarheit der Beschreibung dienen soll. Die jeweils anzuwendende Schleppfehlerkorrektur läßt sich auf all diese Verfahren unter Berücksichtigung der zugrundeliegenden Geometrie entsprechend analog anwenden.

Wie oben beschrieben, erfährt der Schneiddraht 1 beim elektroerosiven Schneiden von Vollschnitten eine Ausbiegung oder Bauchung entgegen der Schneidrichtung. Bei Nachschnitten kann auch eine Ausbauchung senkrecht zur Schneidrichtung auftreten. Die Bauchung entgegen der Schneidrichtung ist in Fig. 1 für den Fall dargestellt, daß die Schneidrichtung in der Zeichenebene von rechts nach links zeigt. Der Schneiddraht 1 baucht sich in diesem Fall also nach rechts. Die Weite S der Bauchung sei hier definiert als der Abstand zwischen der tatsächlichen Drahtposition am Eingang und am Ausgang des Werkstückes und einer Drahtführungsgeraden FF, welche die Anlagepunkte des Schneiddrahtes 1 an den Drahtführungen 6 und 9 miteinander verbindet. Die Weite S bezeichnet auch den tatsächlich auftretenden Schleppfehler.

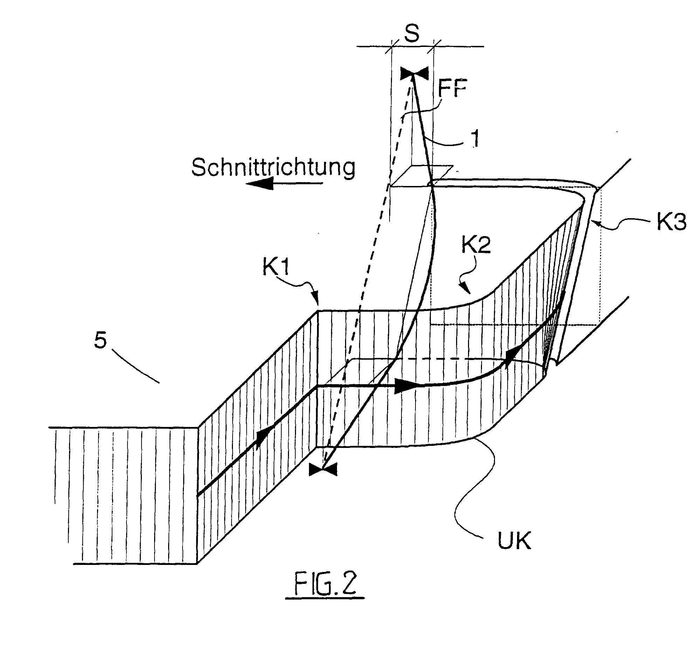

Fig. 2 zeigt ein Beispiel für einen am Werkstück 5 hergestellten Schnitt. Der Schneiddraht 1 ist in einer Situation dargestellt, in welcher er bereits mehrere Abschnitte des Schnittes durchlaufen hat. Der erste Abschnitt ist zylindrisch geschnitten und verläuft bis zu einer Kante oder Ecke K1. Der zweite Abschnitt verläuft von dort weiter bis zu einer Krümmung K2 und ist ebenfalls zylindrisch geschnitten. Der dritte Abschnitt verläuft weiter zu einer Krümmung K3 mit konischer Schnittfläche und ändert selbst seine Konik von einem zylindrischen in einen konischen Schnitt. Alle Abschnitte mit Ausnahme der konischen Abschnitte sind vertikal ausgerichtet, d.h. ihre Mantellinien, die in Fig. 2 als dünne Schraffurlinien gezeichnet sind, verlaufen vertikal durch das Werkstück 1. In der konisch geschnittenen Krümmung K3 verlaufen die Mantellinien schräg zur Vertikalen. Eine dicke gepfeilte Linie, die in der Fig. 2 mitten durch die Mantellinien verläuft, bezeichnet die Schnittrichtung.

Beim zylindrischen Schnitt ergäbe sich idealerweise - wenn der Schneiddraht 1 keine Bauchung hätte, sondern genau der Drahtführungsgeraden FF entspräche - die gewünschte Kontur, wenn die Führungsköpfe entlang einer Drahtführungsbahn in X- und Y-Richtung geführt würden, welche genau einer Umrißkurve UK der auf der Werkstückoberfläche zu schneidenden Kontur entspräche. Beim konischen Schnitt weicht unabhängig von der zusätzlichen U- und V-Relativbewegung des oberen Führungskopfes 7 zum unteren Führungskopf 8 die Drahtführungsbahn des unteren Führungskopfes 7 von der Umrißkurve UK der auf der unteren Werkstückoberfläche zu schneidenden Kontur ab.

Wegen der unvermeidbaren Drahtbauchung befindet sich die Drahtführungsgerade FF nie am Ort der tatsächlichen Erodierzone, sondern im Abstand der Bauchungs-Weite S. Dies führt insbesondere bei Ecken und Krümmungen der Kontur zu den oben beschriebenen Schleppfehlern. Zur Kompensation dieser Schleppfehler muß die Drahtführungsbahn so korrigiert werden, daß der Draht sich immer auf der gewünschten Kontur befindet, also gemäß der Formel:

$$\overrightarrow{F(x)} = \overrightarrow{F_0(x)} + \overrightarrow{S_B(x)} \qquad (1)$$

Dabei bedeuten:

$\overrightarrow{F(x)}$        korrigierte Position der Führungsköpfe (Drahtführungsbah),

$\overrightarrow{F_0(x)}$        ursprüngliche, gewünschte Kontur und

$\overrightarrow{S_B(x)}$        berechneter Schleppfehlerkorrekturvektor.

$\overrightarrow{F(x)}$, $\overrightarrow{F_0(x)}$ und $\overrightarrow{S_B(x)}$ bezeichnen in Formel (1) vektorielle Größen in Abhängigkeit des Ortes x. Formel (1) kann jedoch auch in Abhängigkeit der Zeit t formuliert werden.

Besonders vorteilhaft ist die Möglichkeit, sowohl den Betrag des Schleppfehlerkorrekturvektors als auch die Richtung des Schleppfehlerkorrekturvektors in Funktion der realen Erosionsbedingungen zu berechnen und die Position der Führungsköpfe in Echtzeit entsprechend Formel (1) zu korrigieren.

Man kann die Größe S(t), d.h. den tatsächlich auftretenden Schleppfehler in Abhängigkeit der Zeit t, allgemein so auffassen, daß sie stets - also nicht nur bei geraden Schnitten, sondern auch bei Ecken und Krümmungen - den Abstand angibt, der zwischen der korrigierten Drahtführungsbahn TD und der momentanen Erodierzone entlang der Umrißkurve UK eingehalten werden muß. Zu jedem Zeitpunkt t kann ferner ein Schleppfehlerkorrekturvektor $\overrightarrow{S_B(t)}$ angegeben werden, dessen Momentanbetrag $|\overrightarrow{S_B(t)}|$ jeweils der Weite S(t) entspricht und dessen momentane Richtung ausgehend von einem Punkt der Umrißkurve UK auf den zugehörigen Punkt der korrigierten Drahtführungsbahn TD zeigt. Mit Hilfe dieses Vektors $\overrightarrow{S_B(t)}$ erhält man somit alle Informationen, um die korrigierte Drahtführungsbahn TD aus der Umrißkurve UK zu ermitteln.

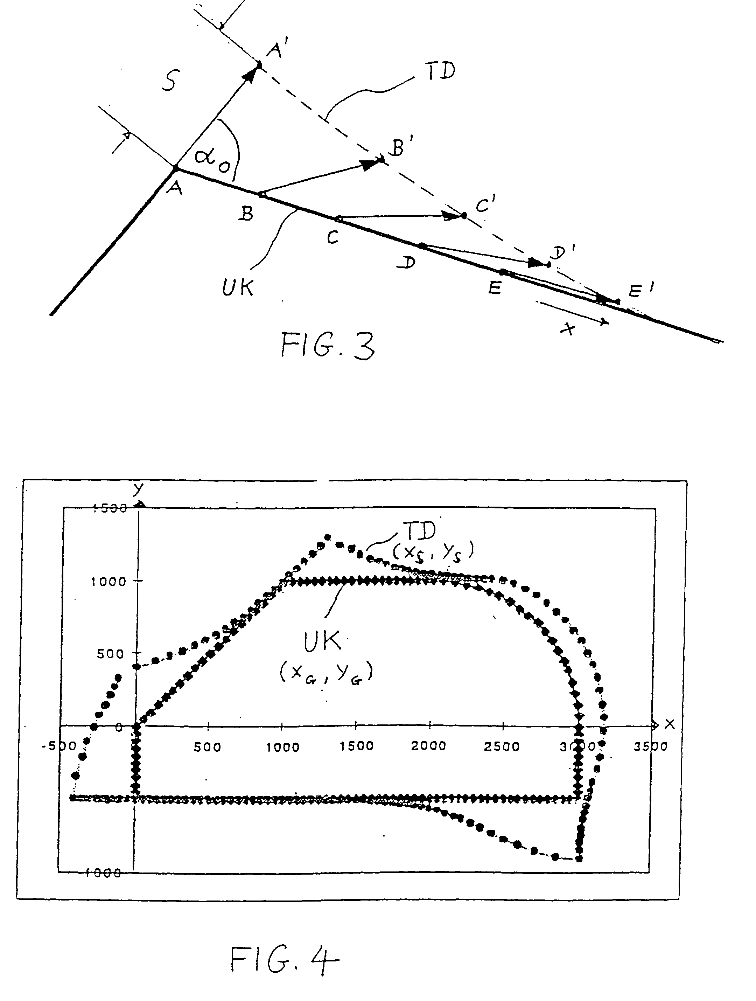

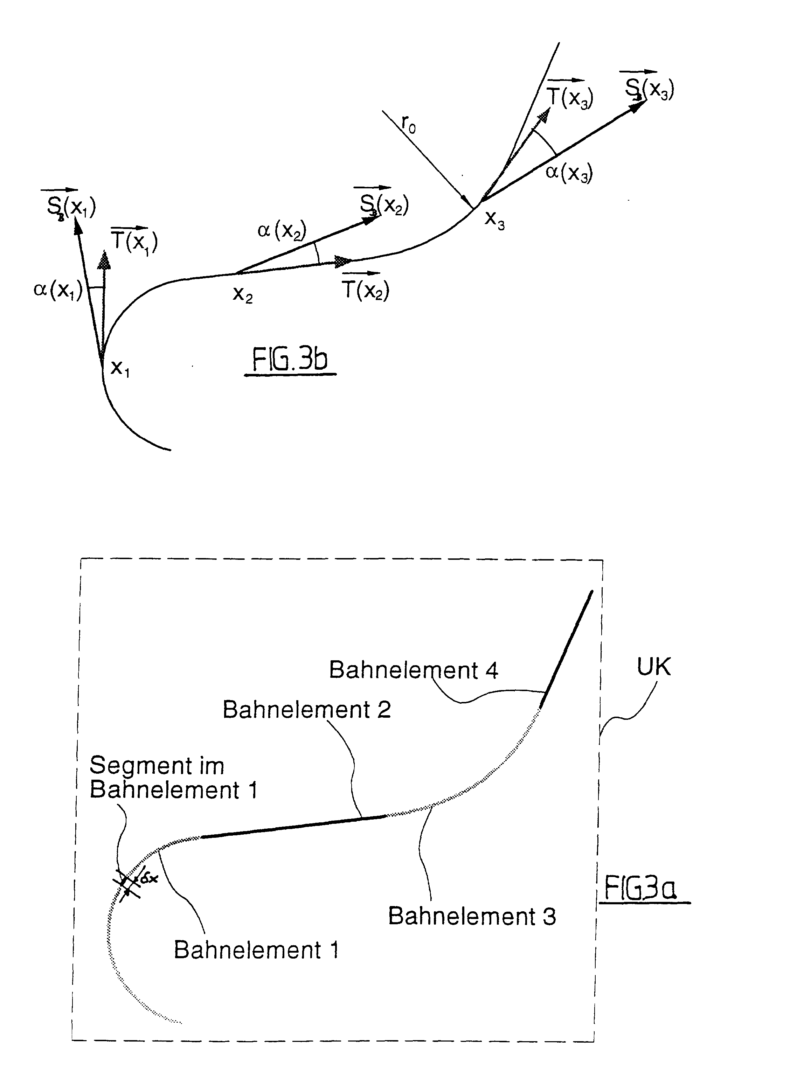

Fig. 3 verdeutlicht diese Situation als erstes Beispiel beim zylindrischen Schneiden einer Ecke. Mit dicker Linie ist die Umrißkurve UK der auf der Werkstückoberfläche zu schneidenden Kontur dargestellt. Wäre ein zylindrischer Schnitt ohne Schleppfehler möglich, entspräche die Umrißkurve UK der Drahtführungsbahn der Führungsköpfe 7,8. Beim (unvermeidbaren) Auftreten des Schleppfehlers muß die Drahtführungsbahn TD entsprechend korrigiert werden. Die Führungsköpfe 7, 8 sollten wegen der Bauchung S des Schneiddrahtes 1 beim Schneiden des geradlinigen Abschnittes vor der Ecke A dem Ort der Erodierzone jeweils um die Länge S in Schneidrichtung entlang der korrigierten Drahtführungsbahn TD vorauseilen. Wie herausgefunden wurde, hängt die Länge S im wesentlichen linear von der in die Erosion investierten Leistung, also vom Momentanwert des Arbeitsstroms - d.h. dem momentanen arithmetischen Mittelwert des in der Erodierzone fließenden Stroms - vom Momentanwert der Erodierspannung, vom Druck aus der Gasblase, die sich um den Plasmakanal bildet, im folgenden Erosionsdruck genannt, vom Spüldruck, sowie von Parametern, welche während des Arbeitsganges nicht variieren oder vorhersagbar sind (Drahtdurchmesser, Drahttyp, Höhe des Werkstücks, Materialtyp, usw.) ab. Eine Folge von entsprechenden technologischen Messungen kann alle Zusammenhänge zwischen der Länge S und der Drahterosionsmaschine, dem Werkstück 5, ggf. der Kontur und der Umgebungsbedingungen mit der nötigen Präzision feststellen. Dies bedeutet, daß man während jedes Arbeitsvorgangs in der Lage ist, den Wert S sofort (z.B. jede Millisekunde) und nur mit Hilfe der Signale, welche den momentanen Arbeitsstrom, die momentane Arbeitsspannung der Erosion und den Spüldruck anzeigen, zu berechnen. Eine hierzu gefundene Formel, die den Betrag des berechneten Momentanwert $|\overrightarrow{S_B(t)}|$ ausreichend genau angibt, lautet:

$$|\overrightarrow{S_B(t)}| = a * i(t) + b * p(t) + c * u(t) + d, \qquad (2)$$

wobei das Symbol * für Multiplikation steht, $i(t)$ der Momentanwert des Arbeitsstromes, $u(t)$ der Momentanwert der Arbeitsspannung und $p(t)$ der Momentandruck der Spülung ist; a, b, c und d sind Faktoren, die im wesentlichen von den oben erwähnten fixen oder vorausbestimmbaren Parametern abhängen und während eines Erosionsvorgangs im wesentlichen konstant sind. Diese Faktoren können experimentell vorbestimmt werden und/oder zumindest teilweise rechnerisch aus den besagten Parametern ermittelt werden und in Vorbereitung der Werkstückbearbeitung in den Rechner der numerischen Steuerung (CNC) der Drahterosionsmaschine eingegeben werden.

Die in Fig. 3 gezeigte zu schneidende Kontur, genauer gesagt die gewünschte Umrißkurve UK, bildet eine Ecke, an der sich die Schnittrichtung abrupt um einen Winkel $\alpha_0$ ändert. Im Augenblick des Erreichens der Ecke A befindet bzw. befinden sich die Drahtführung bzw. Drahtführungen am Punkt A' der Drahtführungsbahn TD. Der Vektor A-A' hat, wie oben beschrieben, den Betrag S und bildet mit der nach der Ecke zu schneidenden Richtung den Winkel $\alpha_0$. Dieser Winkel $\alpha_0$ ist durch die Geometrie der zu schneidenden Umrißkurve vorgegeben. Um den nun folgenden Schnitt entsprechend der Umrißkurve UK über die auf einer Geraden liegenden Punkte A, B, C... weiterzuführen, wird der Vektor von der alten Schnittrichtung allmählich in die neue gedreht, prinzipiell ohne seinen Betrag $|\overrightarrow{S(t)}|$ zu ändern. Das heißt, der Winkel $\alpha(x)$, den der Vektor mit der neuen Schnittrichtung bildet, nimmt mit zunehmender Länge x des neuen Schnittes ab. Hierdurch folgt die Drahtführungsbahn TD den Punkten A', B', C'... usw.. Es wurde herausgefunden, daß der Vektorwinkel $\alpha(x)$ in Bezug auf die Position der neuen Schnittgeraden exponentiell abnimmt, und zwar nach der Formel:

$$\alpha(x) = \alpha_0 * \exp(-x/x_0), \qquad (3)$$

wobei $x_0$ die "Halbwertstrecke" der Rotation des Schleppfehlervektors ist, d.h. die Strecke, in welcher der Schleppfehlervektor die halbe Richtungsänderung durchführt. Die "Halbwertstrecke" hängt im wesentlichen von fixen Parametern der Maschine ab. Die Tatsache der exponentiellen Abnahme des Winkels $\alpha(x)$ bestätigt, daß die durch die Krümmung des Schneiddrahtes verursachte Reibung zur Änderungsgeschwindigkeit der Vektorrichtung proportional ist.

Der Parameter $x_0$ kann ähnlich wie die oben erwähnten Konstanten a, b, c und d experimentell vorbestimmt oder rechnerisch aus festen Parametern der Maschine ermittelt und in einen Speicher 50 der Einrichtung eingegeben werden. Bei großem $\alpha_0$, d.h. bei großer Richtungsänderung der zu schneidenden Kontur zeigt der Wert von $x_0$ außerdem eine gewisse Abhängigkeit von $\alpha_0$, insbesondere infolge der Tatsache, daß die Drahtkrümmung einer Schnittrichtungsänderung Widerstand entgegensetzt. Diese Abhängigkeit kann ebenfalls vorermittelt und in die Software der Einrichtung eingegeben werden.

Aus der Ableitung

$$d\alpha/dx = -\alpha_0/x_0 * \exp(-x/x_0) \qquad (4)$$

läßt sich ersehen, daß bei Aufteilung eines zu schneidenden Bahnelementes gemäß Fig. 3a in Segmente der Länge $\delta x$ die Richtungsänderung des Vektors für jedes Segment nach folgender Formel berechnet werden kann:

$$\delta\alpha(x) = -\alpha(x)/x_0 * \delta x. \qquad (5)$$

Mit Formel (5) wird für jeden Wegabschnitt $\delta x$ die Richtungsänderung oder "Rotation" des Vektors berechnet. Dieser Algorithmus kann leicht auf jede Umrißkurve UK verallgemeinert werden, indem man die momentane Krümmung $1/r_0(x)$ der Umrißkurve im Punkt x berücksichtigt. $\alpha(x)$ ist in diesem Fall der Winkel zwischen dem Vektor am Orte x und der Schnittrichtung, die durch die Tangente im Punkt x gegeben ist, wie in Fig. 3b dargestellt. Zur Berechnung der Winkeländerung $\delta\alpha(x)$ kommt ein neuer Term hinzu, der die Rotation der Tangente über die Strecke $\delta x$ beschreibt, nämlich $\delta x/r_0(x)$. So wird die allgemeine Form der Formel (5) zu

$$\delta\alpha(x) = (\pm 1/r_0(x) - \alpha(x)/x_0)^*\delta x \qquad (6)$$

wobei das "+"-Zeichen zu nehmen ist, wenn die Umrißkurve sich von der momentanen Richtung des Schleppfehlers entfernt und das "-"-Zeichen im umgekehrten Fall.

Die Integration der Formel (6) für stückweise Konstanten $r_0$ und $x_0$ liefert die verallgemeinerte Form der Formel (3) für den Fall, daß die Umrißkurve eine Abfolge von Kreisbögen ist (eine Gerade ist ein Kreisbogen mit Radius $r_0 = \infty$), was bei einer realen Umrißkurve praktisch immer der Fall ist. Man erhält:

$$\alpha(x) = \alpha_0 + (\alpha_0 - \alpha_\infty)^*\exp(-x/x_0), \qquad (7)$$

wobei $\alpha_0$ der Winkel zwischen dem berechneten Schleppfehlerkorrekturvektor $\overrightarrow{S_B}$ und der Tangente der neuen Schnittrichtung im Ursprung eines neuen Bahnelementes (Kreisbogen) und $\alpha_\infty$ der asymptotische Winkel $\alpha$, der für $x >> x_0$ erreicht wird, wenn der Kreisbogen lang genug ist. In diesem stationären Fall ist $\delta\alpha = O$ und aus Formel (6) folgt die Beziehung:

$$\alpha_\infty = x_0/r_0, \qquad (8)$$

die zur Bestimmung des Parameters $x_0$ sehr nützlich ist.

Der Betrag $|\overrightarrow{S_B}|$ des Schleppfehlerkorrekturvektors $\overrightarrow{S_B}$ ist, wie oben beschrieben, grundsätzlich unabhängig von der Geometrie der Umrißkurve. Eine kleine Korrektur ist jedoch im Fall von großen Änderungen der Schneidrichtung nötig, also für $\alpha_o > 90°$, da unter diesen Umständen die Komponente der Richtungsänderung des Schleppfehlerkorrekturvektors $\delta S_B$ entlang der letzten Schneidrichtung sogar negativ ist. Um zu vermeiden, daß der Draht zu weit in das Werkstück hinein erodiert, ist es nötig, den Betrag $|\overrightarrow{S_B}|$ momentan nach folgender Formel zu reduzieren:

$$|\overrightarrow{S_B(x)}| = S_o^*(1 - f^*\sin(g^*x/x_o)^*\exp(x/x_o)) \qquad (9)$$

Dabei bezeichnet $S_o$ den Betrag des Schleppfehlerkorrekturvektors vor der Schnittrichtungsänderung. Die Parameter f und g sind u.a. abhängig von der Schnittrichtungsänderung, der Schnittgeschwindigkeit, ggf. auch den Erosionsparametern und den verwendeten Materialien.

Formel 9 beschreibt eine Oszillation des Schleppfehlerbetrages, die nur bei großen Richtungsänderungen merkbar (oder meßbar) ist und sich innerhalb der Halbwertsstrecke $x_0$ exponentiell reduziert.

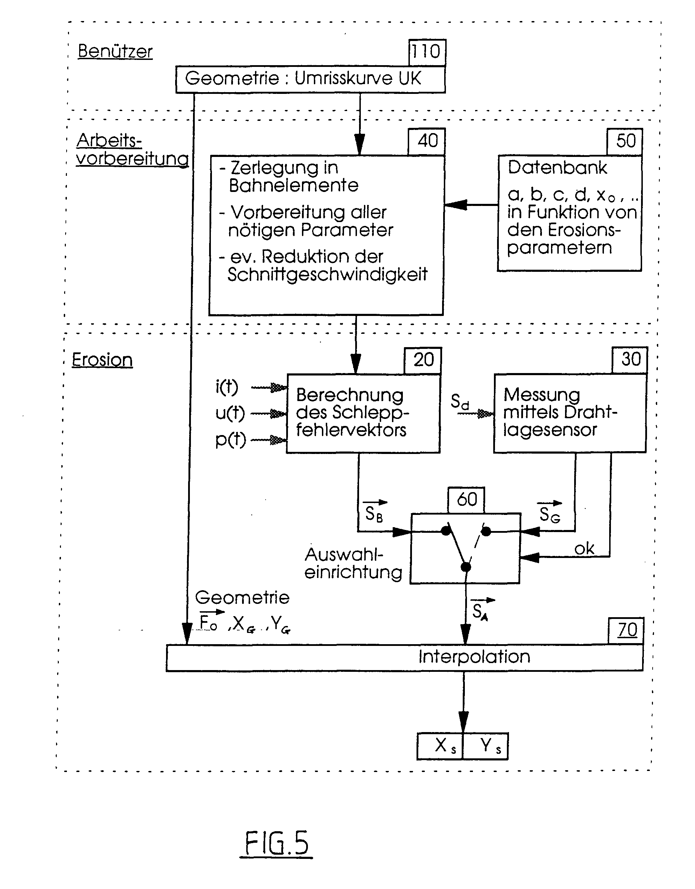

Als zweites Beispiel zeigt Fig. 4 die Anwendung des vorstehenden Algorithmus auf eine zu schneidende Kontur - dargestellt durch eine Umrißkurve UK -, wobei die eckigen Punkte auf der Umrißkurve UK diskrete Orte angeben; die kartesischen Koordinaten dieser Orte seien mit $x_G$ und $y_G$ bezeichnet. Die runden Punkte geben diskrete Werte entlang der korrigierten Drahtführungsbahn TD an, entsprechend den Sollkoordinaten $x_s$ und $y_s$ für einen Drahtführungskopf bzw. die Drahtführungsköpfe. Die auf den Koordinatenachsen angegebenen Zahlen sind Maßangaben in µm. Im dargestellten Fall ist der Betrag des Schleppfehlerkorrekturvektors und des tatsächlichen Schleppfehlers S anschaulicherweise gleich 400 µm.

Das erfindungsgemäße Verfahren bzw. die erfindungsgemäße Drahterosionsmaschine kann praktisch für beliebige Konturen angewendet werden, insbesondere auch bei konischen Schnitten. Bei einem Konikschnitt neigt sich der Schneiddraht 1 - zusätzlich zu seiner Neigung gegen die durch das Werkstück 5 verlaufende Vertikalen meistens in Schneidrichtung aufgrund des Schleppfehlers. Damit befindet sich der Schneiddraht 1 ober- und unterhalb des Werkstückes 5 jeweils unter einem gewissen Neigungswinkel zur Drahtführungsgeraden FF. Diese beiden Neigungswinkel korrelieren mit dem Betrag des Schleppfehlers ober- und unterhalb des Werkstückes und sind im wesentlichen proportional zur Schnittgeschwindigkeit und zum Spüldruck. Damit sind diese Neigungswinkel bzw. die Schleppfehler unterhalb und oberhalb des Werkstückes 5 in erster Näherung gleich groß; sie können jedoch bei größerer Relativgeschwindigkeit der beiden Führungsköpfe 7 und 8 zueinander um bis zu 15% voneinander abweichen. Diese Abweichung kann unter Berücksichtigung dieser Relativgeschwindigkeiten in zweiter Näherung korrigiert werden.

Für jedes Koordinatenpaar $x_G$, $y_G$ der Umrißkurve UK läßt sich also mit dem oben genannten Verfahren ein entsprechendes Sollkoordinatenpaar $x_s$, $y_s$ für die Position des unteren Führungskopfes 8 und/ oder ein entsprechendes Koordinatenpaar für den oberen Führungskopf 7 berechnen. Entsprechend dieser Berechnung kann dann die Stelleinrichtung der Maschine gesteuert werden, unter Berücksichtigung der jeweils augenblicklichen Erosionsparameter i(t), u(t) und p(t), ohne daß auf die Meßwerte irgendwelcher Drahtlagesensoren zurückgegriffen werden muß.

Ferner beruht die Güte dieses Verfahrens auf der Vollständigkeit der Datenbank, mit welcher die beschriebenen Parameter a, b, c, d, $x_0$ in Funktion der Maschinenparameter (Drahtdurchmesser, Höhe des Werkstückes,...) bestimmt werden. Eine hochwertige, hochautomatisierte Erosionsmaschine kann die verschiedenen Verfahren, insbesondere sensorgestützte und "softwaregestützte" Verfahren intelligent kombinieren, in dem Sinn, daß praktisch alle Nachteile, die einem Verfahren anhaften, vom anderen Verfahren überwunden werden können. Obwohl die verschiedenen Verfahren an sich unabhängige Lösungen darstellen, ermöglicht ihre Kombination alle praktischen Einschränkungen in ihrer Verwendung zu eliminieren.

Die erste Einrichtung kann also bevorzugt in eine Drahterosionsmaschine eingebaut sein, die noch weitere Einrichtungen zur Schleppfehlerermittlung enthält, insbesondere eine zweite Einrichtung, deren Betrieb sich auf die Signale eines oder mehrerer Drahtlagesensoren stützt. Durch gezielte Auswahl ist es damit möglich, die Bearbeitung des Werkstücks 5 hinsichtlich maximaler Sicherheit und maximaler Bearbeitungsgeschwindigkeit zu optimieren. Ferner können komplexe Geometrien mit schwierig zu schneidenden Umrißkurven UK automatisch ohne Intervention des Bedieners mit maximaler Zuverlässigkeit und Genauigkeit geschnitten werden.

Wenn sehr schwierige Erosionsbedingungen auftreten, z.B. spitze Winkel unterhalb 20° innerhalb der zu erodierenden Kontur, kann zusätzlich, unabhängig vom verwendeten Verfahren, die Schnittgeschwindigkeit kurzzeitig reduziert werden: Der Schleppfehlerkorrekturvektor bzw. dessen Betrag wird in beiden Fällen sofort angepaßt.

Im folgenden sei anhand Fig. 5 ein Ausführungsbeispiel für eine entsprechende Kombination zweier Einrichtungen zur Schleppfehlerermittlung beschrieben, zusammen mit Maßnahmen zur intelligenten Auswahl der jeweils zu nutzenden Einrichtung, die auch ohne Mitwirkung oder Intervention des Bedieners getroffen werden kann, mit dem Vorteil, daß kein spezifisches Know-how des Bedieners verlangt wird: Er muß im wesentlichen nur die Endgeometrie und die gewünschte Genauigkeit und Rauhheit festlegen. Dieses Vorgehen ist in Fig. 5 mit dem Bezugszeichen 110 versehen. Die Sicherheit, eine angestrebte Endgeometrie in der gewünschten Form zu erhalten, wird durch das Verfahren aufgrund zweier unabhängiger Kontrollorgane 20 und 30, nämlich Berechnung und Messung eines Schleppfehlerkorrekturvektors $\vec{S_B}$ bzw. $\vec{S_G}$, gegenüber einer normalen Bearbeitung deutlich erhöht.

Die numerische Steuerung 40 zerlegt die Umrißkurve in Bahnelemente (meist Kreisbögen) und bereitet alle nötigen Parameter mit Hilfe der Datenbank 50 vor. Die numerische Steuerung kann eine geometrieabhängige Anpassung der Sollgeschwindigkeit einsetzen, wenn besonders schwierige Arbeitsbedingungen auftreten, ohne daß man etwas vom gesamten Korrektursystem ändern muß. Das Korrektursystem errechnet oder mißt einen neuen Schleppfehlerkorrekturvektor entsprechend. Die korrigierte Endgeometrie TD der Führungsköpfe wird von einem Interpolator 70 berechnet.

Eine Erhöhung der Betriebssicherheit und Genauigkeit kann durch Einführung eines Drahtlagesensors 30 erreicht werden. Zur Korrektur des Schleppfehlers stehen in diesem Fall zwei Verfahren bzw. Einrichtungen 20 und 30 zur Verfügung, die an sich zwei ähnliche Schleppfehlerkorrekturvektoren $\vec{S_G}$ und $\vec{S_B}$ liefern.

Die erste Einrichtung 20 empfängt die zeitabhängigen Erosionsparameter i(t), u(t) und p(t) und enthält Rechenmittel, die nach Algorithmen gemäß den obigen Formeln den Betrag und die Richtung des Schleppfehlerkorrekturvektors $\vec{S_B}$ ermitteln. Diese Werte des Schleppfehlerkorrekturvektors gelangen zu einem Signaleingang einer Auswahleinrichtung 60, symbolisch durch einen Schalter dargestellt. Von einem zugeordneten Ausgang der Auswahleinrichtung 60 werden die Korrekturwerte auf einen Eingang des Interpolators 70 gegeben und dort mit Koordinatenwerten $x_G$, $y_G$ der zu schneidenden Umrißkurve verknüpft, um korrigierte Sollkoordinaten $x_s$, $y_s$ für die Führungsköpfe zu erhalten.

Bei der in Fig. 5 dargestellten Ausführungsform ist neben der ersten Einrichtung 20 die zweite Einrichtung 30 vorgesehen, welche wenigstens ein Sensorsignal $S_d$ wenigstens eines Drahtlagesensors empfängt, der in Fig. 1 schematisch mit dem Bezugszeichen 13 dargestellt ist. Als Drahtlagesensor 13 kann beispielsweise eine Vorrichtung verwendet werden, wie sie in der EP-0 312 056 A1 offenbart ist. Die zweite Einrichtung 30 ermittelt aus dem bzw. den Sensorsignal(en) $S_d$ die Bauchung des Schneiddrahtes 1 und leitet hieraus ebenfalls entsprechende Werte für einen Schleppfehlerkorrekturvektor $\vec{S_G}$ ab. Der von der zweiten Einrichtung 30 gelieferte Schleppfehlerkorrekturvektor $\vec{S_G}$ kann alternativ oder gemeinsam zu dem von der ersten Einrichtung 20 gelieferten Schleppfehlerkorrekturvektor $\vec{S_B}$ über die Auswahleinrichtung 60 auf den Interpolator 70 gegeben werden, wo sie in ähnlicher Weise verarbeitet werden, wie es oben in Verbindung mit der ersten Einrichtung 20 beschrieben ist. Werden $\vec{S_G}$ und $\vec{S_B}$ gemeinsam auf den Interpolator 70 gegeben, so kann dieser beispielsweise durch Mittelung oder ähnliche Methoden einen gemittelten Korrekturwert ableiten.

Ein mögliches Vorgehen zur endgültigen Feststellung der korrigierten Drahtführungsbahn TD ist folgendes:

*   Mit der Annahme, daß die Meßbedingungen optimal und die Meßgenauigkeit genügend sind, korrigiert man die Bahn mit dem Schleppfehlerkorrekturvektor $\vec{S_G}$ aus Messung mittels Drahtlagesensors 30.

*   Gleichzeitig berechnet die erste Einrichtung 20 den Schleppfehlerkorrekturvektor $\vec{S_B}$ mit Hilfe der Momentanwerte i(t), u(t), p(t).

*   Wenn die Differenz der zwei Signale $\Delta S = S_G - S_B$ einen bestimmten Wert überschreitet, wird die Schnittgeschwindigkeit reduziert.

*   Die zweite Einrichtung 30 überwacht Schwankungen der Sensorsignale, z.B. mit der Berechnung der Varianz über eine gewisse Zeitspanne. Wenn die Varianz einen bestimmten Wert überschreitet oder gleich 0 ist, d.h. der Drahtlagesensor außer Betrieb ist, signalisiert die Steuerung 30 diese fehlerhafte Situation der Auswahleinrichtung 60, die dann mit einem bestimmten Algorithmus zur Verwendung des Signals $S_B$ übergeht.

Alternativ zu diesem Vorgehen ist es für bestimmte Bearbeitungen vorteilhaft, den Schleppfehlerkorrekturvektor $\overrightarrow{S_B}$ als Hauptsignal zu verwenden und $\overrightarrow{S_G}$ als zusätzlichen Sensor zur Überwachung von möglichen Vibrationen des Drahtes nützen.

Die Auswahleinrichtung 60 soll in Echtzeit entscheiden, welche Art von Schleppfehlererfassung bzw. -korrektur am sinnvollsten ist, entweder die erste im wesentlichen sensorunabhängigen Schleppfehlererfassung bzw. -korrektur mittels der ersten Einrichtung 20 oder die zweite sensorgestützte Schleppfehlererfassung bzw. -korrektur mittels der zweiten Einrichtung 30 oder eine Kombination dieser beiden Korrekturen. Diese Entscheidung soll aufgrund mehrerer Kriterien getroffen werden, insbesondere der Signalstabilität des Drahtlagesensor 13 bzw. der zweiten Einrichtung 30, der Prozeßstabilität und der Konturgeometrie.

Zur Feststellung etwaiger Instabilitäten des wenigstens einen Sensorsignals $S_d$ wird dieses Signal laufend überwacht. Die Auswahleinrichtung 60 wählt den von der ersten Einrichtung 20 gelieferten Schleppfehlerkorrekturvektor $\overrightarrow{S_B}$, wenn das Sensorsignal $S_d$ wenigstens eines der folgenden Kriterien erfüllt:

1. Der Absolutwert des Sensorsignals $S_d$ überschreitet bzw. unterschreitet einen vorgegebenen Grenzwert.

2. Die Oszillation des Sensorsignal $S_d$ - d.h. die Vibration des Schneiddrahtes 1 - überschreitet bzw. unterschreitet eine vorgegebene Grenzamplitude, was beispielsweise mittels der Standardabweichung oder der Varianz des Sensorsignals $S_d$ bestimmt werden kann.

3. Die Änderung des Sensorsignals $S_d$ pro Zeiteinheit überschreitet einen vorgegebenen Grenzwert.
Die Erfüllung des 1. und 3. Kriteriums kann auf ein unerwünschtes Verhalten des Drahtlagesensors 13 hindeuten, so daß die erste Einrichtung 20 einspringen muß. Der Drahtlagesensor 13 kann aber auch von Anfang an nicht ansprechen. Um diesem Fall Rechnung zu tragen, wird die erste Einrichtung 20 noch anhand eines vierten Kriteriums ausgewählt:

4. In einer Testphase vor dem Start der Erosion wird durch Erhöhen des Spüldruckes (z.B. von 0 auf 18 bar) eine etwaige Schwankung des Sensorsignals $s_d$ ermittelt.

Signalschwankungen eines Drahtlagesensors 13 bei Druckerhöhung entstehen z.B. durch eine vorhergegangene Fehlbedienung der Drahterosionsmaschine (Kollision), welche die Beschädigung des Sensors zur Folge hatte.

Die Funktionen der Einrichtungen 20 und 30 können zumindest teilweise durch einen gemeinsamen Rechner oder durch getrennte Prozessoren erfüllt werden, ebenso wie die Funktionen der Auswahleinrichtung 60 und des Interpolators 70.

Mit der beschriebenen Anordnung besteht die Möglichkeit, während der Bearbeitung eines Werstükkes die Art der Schleppfehlererfassung und damit auch die Schleppfehlerkorrektur zu wechseln. Der Wechsel von einer Einrichtung 20, 30 zur anderen (z.B. von der zweiten 30 zur ersten Einrichtung 20 oder umgekehrt) erfolgt mit Übergängen, die innerhalb der gegebenen Konturtoleranz des jeweiligen Schnittes liegen.

Nachfolgend werden zwei Ausführungsbeispiele beschrieben, wie die Drahterosionsmaschine mit einem Wechsel zwischen verschiedenen Schleppfehlererfassungsarten betrieben werden kann:

Ausführungsbeispiel 1: Softwaregestützte Korrektur

Die Auswahleinrichtung 60 übergibt dem Interpolator 70 den berechneten Schleppfehlerkorrekturvektor $S_B$. Der Drahtlagesensor bzw. die zweite Einrichtung 30 wird zur Überwachung der Drahtbewegung benützt.

Falls

\* die Oszillationen des Drahtes (Standardabweichung des Sensorsignals $S_d$) einen bestimmten Wert überschreitet, oder

\* die Differenz der zwei Signale

$$|\overrightarrow{\Delta S}| = |\overrightarrow{S_G} - \overrightarrow{S_B}|$$

einen bestimmten Wert überschreitet,

dann wird die Schnittgeschwindigkeit reduziert, bis die oben erwähnten Kriterien erfüllt sind.

Ausführungsbeispiel 2: Sensorgestützte Korrektur

Der Schleppfehlerkorrekturvektor $\overrightarrow{S_G}$ aus Messung mittels Drahtlagesensors wird als Hauptsignal benützt und von der Auswahleinrichtung 60 dem Interpolator weitergegeben.

Falls

\* die Oszillationen des Drahtes (Standardabweichung des Sensorsignals $S_d$) einen bestimmten Wert überschreitet, oder

\* die Differenz der zwei Signale

$$|\overrightarrow{\Delta S}| = |\overrightarrow{S_G} - \overrightarrow{S_B}|$$

einen bestimmten Wert überschreitet,

dann signalisiert die Steuerung 50 diese fehlerhafte Situation der Auswahleinrichtung 60, die dann einen bestimmten Algorithmus zur Verwendung des berechneten Schleppfehlerkorrekturvektors $\overrightarrow{S_B}$ auswählt und anwendet.

**Patentansprüche**

1. Drahterosionsmaschine mit:

    a) einem zwischen zwei Führungsköpfen (7, 8) geführten, als Erodierelektrode wirkenden Schneiddraht (1),
    b) einer Stelleinrichtung (90) zum Durchführen von Bewegungen der Führungsköpfe (7, 8), ggf. eines Werkstücks (5), entlang jeweils einer Drahtführungsbahn (TD) derart, daß eine Kontur in das Werkstück (5) schneidbar ist, und
    c) einer ersten Einrichtung (20), die derart ausgelegt ist, daß sie den durch die Bauchung des Schneiddrahtes (1) entstehenden, tatsächlichen Schleppfehler (S) kompensiert durch Korrigieren der jeweiligen Drahtführungsbahn (TD) gegenüber einer durch wenigstens eine Umrißkurve (UK) dargestellten, zu schneidenden Kontur,
    **dadurch gekennzeichnet, daß**
    d) die erste Einrichtung (20) derart ausgelegt ist, daß sie zum Korrigieren der jeweiligen Drahtführungsbahn (TD) einen Schleppfehlerkorrekturvektor ($\overrightarrow{S_B}$) berechnet, wobei sie

    d1) dessen Betrag ($|\overrightarrow{S_B(t)}|$) aus den momentanen der Erosion zugrundeliegenden Erosionsparametern und
    d2) dessen Richtung als Winkel ($\alpha(x)$) zwischen dem berechnetem Schleppfehlerkorrekturvektor ($\overrightarrow{S_B}$) und der Tangente an einen Punkt x der Umrißkurve (UK), aus den momentanen der Erosion zugrundeliegenden Erosionsparametern und/oder aus der Geometrie der zu schneidenden Kontur

    berechnet.

2. Drahterosionsmaschine nach Anspruch 1, **dadurch gekennzeichnet, daß** die Berechnung des Betrages ($|\overrightarrow{S_B(t)}|$) und/oder der Richtung ($\alpha(x)$) des berechneten Schleppfehlerkorrekturvektors ($\overrightarrow{S_B}$) aus den Erosionsparametern Erosionsstrom (i(t)), Erosionsspannung (u(t)) und/oder Spüldruck (p(t)) erfolgt.

3. Drahterosionsmaschine nach Anspruch 1 oder 2, **dadurch gekennzeichnet, daß** die erste Einrichtung (20) derart ausgelegt ist, daß sie den Betrag ($|\overrightarrow{S_B(t)}|$) des berechneten Schleppfehlerkorrekturvektors ($\overrightarrow{S_B}$) berechnet aus dem momentanen Arbeitsstrom i(t), der momentanen Erosionsspannung u(t) und dem momentanen Spüldruck p(t) nach der vereinfachten Formel:

$$|\overrightarrow{S_B(t)}| = a * i(t) + b * p(t) + c * u(t) + d,$$

wobei a, b, c und d experimentell oder rechnerisch aus festen Parametern der Drahterosionsmaschine und des Werkstückes (5) vorbestimmbare, insbesondere konstante Faktoren sind.

4. Drahterosionsmaschine nach einem der vorstehenden Ansprüche, **dadurch gekennzeichnet, daß** die erste Einrichtung (20) derart ausgelegt ist, daß sie Bahnelemente der Umrißkurve (UK) in Segmente aufteilt und für jedes neue Segment aufeinanderfolgender Segmente der Länge $\delta x$ den Winkel $\delta\alpha(x)$ berechnet nach der Formel:

$$\delta\alpha(x) = (\pm\, 1/r_0 - \alpha(x) / x_0) * \delta x,$$

wobei x die laufende Länge des als nächstes zu schneidenden Abschnittes, $x_0$ ein experimentell oder rechnerisch aus festen Parametern der Drahterosionsmaschine vorbestimmbarer Parameter und $1/r_0$ die Krümmung der Umrißkurve ist, wobei $r_0$ und $x_0$ beim Übergang vom vorherigen zum gegenwärtigen Bahnelement berechnet werden.

5. Drahterosionsmaschine nach einem der vorstehenden Ansprüche, **dadurch gekennzeichnet, daß** die erste Einrichtung (20) derart ausgelegt ist, daß sie, wenn die Umrißkurve (UK) eine Abfolge von Kreisbogen ist, den Winkel ($\alpha(x)$) zwischen dem berechneten Schleppfehlerkorrekturvektor ($\overrightarrow{S_B}$) und der Tangente im Punkt x der Umrißkurve (UK) berechnet und zwar näherungsweise nach der Formel:

$$\alpha(x) = \alpha_0 + (\alpha_0 - \alpha_\infty) * \exp(-x/x_0),$$

wobei $\alpha_0$ der Winkel zwischen dem Schleppfehlerkorrekturvektor ($S_B$) und der Tangente der neuen Schnittrichtung und $\alpha_\infty$ der asymptotische Winkel ist, der für $x \gg x_0$ erreicht wird.

6. Drahterosionsmaschine nach Anspruch 5, **dadurch gekennzeichnet, daß** die erste Einrichtung (20) derart ausgelegt ist, daß sie den Parameter $x_0$ aus der Beziehung

$$\alpha_\infty = x_0/r_0$$

ermittelt.

7. Drahterosionsmaschine nach einem der vorstehenden Ansprüche, **gekennzeichnet durch**

   a) eine zweite Einrichtung (30) zum Ermitteln eines Schleppfehlerkorrekturvektors ($\overrightarrow{S_G}$) aus einer Messung des tatsächlichen Schleppfehlers (S) und
   b) eine Auswahleinrichtung (60) zum Auswählen eines Schleppfehlerkorrekturvektors ($\overrightarrow{S_B}$; $\overrightarrow{S_G}$) einer Einrichtung (20; 30) oder einer Kombination von Schleppfehlerkorrekturvektoren mehrerer Einrichtungen (20, 30).

8. Drahterosionsmaschine nach Anspruch 7, **dadurch gekennzeichnet, daß** die zweite Einrichtung (30) eine Sensoreinrichtung (13; 30) zum Ermitteln der relativen Lage des Schneiddrahtes (1) zu den Führungsköpfen (7,8) und zum Erzeugen wenigstens eines entsprechenden Sensorsignals ($S_d$) aufweist.

9. Drahterosionsmaschine nach Anspruch 7 oder 8, **dadurch gekennzeichnet, daß**

   a) die Auswahleinrichtung (60) einem Interpolator (70) einen ausgewählten Schleppfehlerkorrekturvektor ($\overrightarrow{S_A}$) liefert und
   b) der Interpolator (70) mittels dieses Schleppfehlers ($\overrightarrow{S_A}$) und/oder der Geometrie der Umrißkurve (UK) jeweils die korrigierte Bahn der Drahtführungen ermittelt.

10. Drahterosionsmaschine nach einem der vorstehenden Ansprüche, **gekennzeichnet durch** eine numerische Steuerung (40), welche die Schnittgeschwindigkeit reduziert, wenn schwierige Arbeitsbedingungen auftreten.

11. Drahterosionsmaschine nach einem der Ansprüche 7 bis 10, **dadurch gekennzeichnet, daß** die erste und/oder zweite Einrichtung (20, 30), die Auswahleinrichtung (60) und/oder der Interpolator (70) durch Implementierung entsprechender Rechnerprogramme in einer oder mehreren Rechnereinrichtungen realisiert ist/sind.

12. Drahterosionsmaschine nach einem der Ansprüche 8 bis 11, **dadurch gekennzeichnet, daß** die Auswahleinrichtung (60) mit der zweiten Einrichtung (30) derart gekoppelt ist, daß die Auswahleinrichtung (60) den von der ersten Einrichtung (20) erzeugten Schleppfehler ($S_B$) durchschaltet, sobald das Sensorsignal ($S_d$) gewisse Kriterien erfüllt, insbesondere das Erreichen jeweils eines vorgegebenen Grenzwertes der Oszillationen bzw. Varianz oder Standardabweichung, der Änderung pro Zeiteinheit und/oder der Absolutwert des Sensorsignals ($S_d$).

13. Verfahren zum Bewegen von Führungsköpfen (7, 8), ggf. eines Werkstücks (5), einer Drahterosionsmaschine entlang jeweils einer Drahtführungsbahn (TD), wobei

   a) mittels eines zwischen den Führungsköpfen verlaufenden Schneiddrahtes (1) eine Kontur in das Werkstück (5) geschnitten wird und
   b) der durch die Bauchung des Schneiddrahtes (1) entstehende, tatsächliche Schleppfehler (S) kompensiert wird, indem die jeweilige Drahtführungsbahn (TD) gegenüber einer durch wenigstens eine Umrißkurve (UK) dargestellte, zu schneidende Kontur korrigiert wird,
   **dadurch gekennzeichnet, daß**
   c) zum Korrigieren der jeweiligen Drahtführungsbahn (TD) ein Schleppfehlerkorrekturvektor ($\overrightarrow{S_B}$) berechnet wird, wobei

     c1) dessen Betrag ($|\overrightarrow{S_B(t)}|$) aus den momentanen der Erosion zugrundeliegenden Erosionsparametern und

     c2) dessen Richtung als Winkel ($\alpha(x)$) zwischen dem berechnetem Schleppfehlerkorrekturvektor ($\overrightarrow{S_B}$) und der Tangente an einen Punkt x der Umrißkurve (UK), aus den momentanen der Erosion zugrundeliegenden Erosionsparametern und/oder aus der Geometrie der zu schneidenden Kontur

   berechnet wird.

14. Verfahren nach Anspruch 13, **dadurch gekennzeichnet**, der Betrag ($|\overrightarrow{S_B(t)}|$) und/oder der Richtung ($\alpha(x)$) des berechneten Schleppfehlerkorrekturvektors ($\overrightarrow{S_B}$) aus den Erosionsparametern Erosionsstrom ($i(t)$), Erosionsspannung ($u(t)$) und/oder Spüldruck ($p(t)$) berechnet wird.

15. Verfahren nach Anspruch 13 oder 14, **dadurch gekennzeichnet, daß** der Betrag ($|\overrightarrow{S_B(t)}|$) des berechneten Schleppfehlerkorrekturvektors ($\overrightarrow{S_B}$) aus dem momentanen Arbeitsstrom $i(t)$, der momentanen Erosionsspannung $u(t)$ und dem momentanen Spüldruck $p(t)$ berechnet wird nach der vereinfachten Formel:

$$| \overrightarrow{S_B(t)} | = a * i(t) + b * p(t) + c * u(t) + d,$$

wobei a, b, c und d experimentell oder rechnerisch aus festen Parametern der Drahterosionsmaschine und des Werkstückes (5) vorbestimmbare, insbesondere konstante Faktoren sind.

16. Verfahren nach einem der Ansprüche 13 bis 15, **dadurch gekennzeichnet, daß** Bahnelemente der Umrißkurve (UK) in Segmente aufteilt werden und für jedes neue Segment aufeinanderfolgender Segmente der Länge δx der Winkel δα(x) nach der Formel:

$$\delta\alpha(x) = (\pm\ 1/r_0 - \alpha(x) / x_0) * \delta x,$$

berechnet wird, wobei x die laufende Länge des als nächstes zu schneidenden Abschnittes, $x_0$ ein experimentell oder rechnerisch aus festen Parametern der Drahterosionsmaschine vorbestimmbarer Parameter und $1/r_0$ die Krümmung der Umrißkurve ist, wobei $r_0$ und $x_0$ beim Übergang vom vorherigen zum gegenwärtigen Bahnelement berechnet werden.

17. Verfahren nach einem der Ansprüche 13 bis 16, **dadurch gekennzeichnet, daß** der Winkel (α(x)) zwischen dem berechneten Schleppfehlerkorrekturvektor ($\overrightarrow{S_B}$) und der Tangente in Punkt x der Umrißkurve (UK), wenn die Umrißkurve (UK) eine Abfolge von Kreisbögen ist, näherungsweise nach der Formel

$$\alpha(x) = \alpha_0 + (\alpha_0 - \alpha_\infty) * \exp(-x/x_0),$$

berechnet wird, wobei $\alpha_0$ der Winkel zwischen dem Schleppfehlerkorrekturvektor ($\overrightarrow{S_B}$) und der Tangente der neuen Schnittrichtung und $\alpha_\infty$ der asymptotische Winkel ist, der für x >> $x_0$ erreicht wird.

18. Verfahren nach Anspruch 17, **dadurch gekennzeichnet, daß** der Parameter $x_0$ aus der Beziehung

$$\alpha_\infty = x_0/r_0$$

ermittelt wird.

19. Verfahren nach einem der Ansprüche 13 bis 18, **dadurch gekennzeichnet, daß**

a) ein Schleppfehlerkorrekturvektor ($\overrightarrow{S_G}$) durch Messen des tatsächlichen Schleppfehlers (S) ermittelt wird und
b) ein Schleppfehlerkorrekturvektor ($\overrightarrow{S_B}$; $\overrightarrow{S_G}$)

oder eine Kombination mehrerer Schleppfehlerkorrekturvektoren ($\overrightarrow{S_B}$, $\overrightarrow{S_G}$) ausgewählt wird.

20. Verfahren nach Anspruch 19, **dadurch gekennzeichnet, daß** die relative Lage des Schneiddrahtes (1) zu den Führungsköpfen (7, 8) mittels Messung bestimmt und wenigstens ein entsprechendes Sensorsignal ($S_d$) erzeugt wird.

21. Verfahren nach Anspruch 19 oder 20, **dadurch gekennzeichnet, daß** mittels des ausgewählten Schleppfehlerkorrekturvektors ($\overrightarrow{S_B}$; $\overrightarrow{S_G}$) bzw. der ausgewählten Kombination von Schleppfehlerkorrekturvektoren ($\overrightarrow{S_B}$, $\overrightarrow{S_G}$) und/oder der Geometrie der Umrißkurve (UK) jeweils die korrigierte Bahn der Drahtführungen ermittelt wird.

22. Verfahren nach einem der Ansprüche 13 bis 21, **dadurch gekennzeichnet, daß** die Schnittgeschwindigkeit reduziert wird, wenn schwierige Arbeitsbedingungen auftreten.

23. Verfahren nach einem der Ansprüche 20 bis 22, **dadurch gekennzeichnet, daß** der berechnete Schleppfehlerkorrekturvektor ($\overrightarrow{S_B}$) ausgewählt wird, wenn das Sensorsignal ($S_d$) gewisse Kriterien erfüllt, insbesondere das Erreichen jeweils eines vorgegebenen Grenzwerts der Oszillationen bzw. Varianz- oder Standardabweichung, der Änderung pro Zeiteinheit und/oder der Absolutwert des Sensorsignals ($S_d$).

**Claims**

1. A wire erosion machine, comprising

a) a cutting wire (1) which acts as erosion electrode and is guided between two guide heads (7, 8),
b) a setting device (90) for effecting movements of the guide heads (7, 8), possibly of a workpiece (5), along in each case a wire guide-path (TD) in such a manner that a contour can be cut into the workpiece (5), and
c) a first device (20) which is so designed that it compensates for the actual drag error (S) which occurs due to the bulging of the cutting wire (1) by correcting the existing wire guide-path (TD) with reference to a contour to be cut which is represented by at least one contour curve (UK),
**characterized by** the fact that
d) the first device (20) is designed in the manner that for the correction of the existing wire guide path (TD) it calculates a drag error correction vector ($S_B$), wherein it calculates

d1) the amount thereof ($|\vec{S}_B(t)|$) from the instantaneous erosion parameters forming the basis of erosion and

d2) the direction thereof as the angle ($\alpha(x)$) between the calculated drag error correction vector ($\vec{S}_B$) and the tangent to a point x of the contour curve (UK) from the instantaneous erosion parameters forming the basis of the erosion and/or from the geometry of the contour to be cut.

2. A wire erosion machine according to Claim 1, **characterized by** the fact that the calculation of the amount ($|\vec{S}_B(t)|$) and/or the direction ($\alpha(x)$) of the calculated drag error correction vector ($\vec{S}_B$) is effected from the erosion parameters erosion current ($i(t)$), erosion voltage ($u(t)$) and/or flushing pressure ($p(t)$).

3. A wire erosion machine according to Claim 1 or 2, **characterized by** the fact that the first device (20) is designed in such a manner that it calculates the amount ($|\vec{S}_B(t)|$) of the calculated drag error correction vector ($\vec{S}_B$) from the instantaneous operating current $i(t)$, the instantaneous erosion voltage $u(t)$, and the instantaneous flushing pressure $p(t)$ in accordance with the simplified formula

$$|\vec{S}_B(t)| = a * i(t) + b * p(t) + c * u(t) + d$$

in which a, b, c and d are factors which can be predetermined experimentally or arithmetically from fixed parameters of the wire erosion machine and the workpiece (5), particularly constant factors.

4. A wire erosion machine according to any of the preceding claims, **characterized by** the fact that the first device (20) is designed in such a manner that it divides path elements of the contour curve (UK) into segments and calculates the angle $\delta\alpha(x)$ for each new segment of successive segments of length $\delta x$ in accordance with the formula:

$$\delta\alpha(x) = (\pm\ 1/r_0 - \alpha(x)\ /\ x_0) * \delta x,$$

in which x is the running length of the next section to be cut, $x_0$ is a parameter which can be predetermined experimentally or arithmetically from fixed parameters of the wire erosion machine, and $1/r_0$ is the curvature of the contour curve, $r_0$ and $x_0$ being calculated upon passage from the previous path element to the present path element.

5. A wire erosion machine according to any of the preceding claims, **characterized by** the fact that the first device (20) is designed in such a manner that when the contour curve (UK) is a sequence of circular arcs, it calculates the angle ($\alpha(x)$) between the calculated drag error correction vector ($\vec{S}_B$) and the tangent at the point x of the contour curve (UK), approximately in accordance with the formula:

$$\alpha(x) = \alpha_0 + (\alpha_0 - \alpha_\infty) * \exp(-x/x_0)$$

in which $\alpha_0$ is the angle between the drag error correction vector ($\vec{S}_B$) and the tangent of the new cutting direction and $\alpha_\infty$ is the asymptotic angle which is reached for $x \gg x_0$.

6. A wire erosion machine according to Claim 5, **characterized by** the fact that the first device (20) is designed in such a manner that it determines the parameter $x_0$ from the relationship

$$\alpha_\infty = x_0/r_0.$$

7. A wire erosion machine according to any of the preceding claims, **characterized by**

a) a second device (30) for determining a drag error correction vector ($\vec{S}_G$) from a measurement of the actual drag error (S), and
b) a selection device (60) for selecting a drag error correction vector ($\vec{S}_B; \vec{S}_G$) of a device (20; 30) or a combination of drag error correction vectors of several devices (20, 30).

8. A wire erosion machine according to Claim 7, **characterized by** the fact that the second device (30) has a sensor device (13; 30) for determining the relative position of the cutting wire (1) with respect to the guide heads (7, 8) and for producing at least one corresponding sensor signal ($S_d$).

9. A wire erosion machine according to Claim 7 or 8, **characterized by** the fact that

a) the selection device (60) supplies a selected drag error correction vector ($\vec{S}_A$) to an interpolator (70) and,
b) by means of this drag error ($\vec{S}_A$) and/or the geometry of the contour curve (UK), the interpolator (70) in each case determines the corrected path of the wire guides.

10. A wire erosion machine according to any of the preceding claims, **characterized by** a numerical control (40) which reduces the cutting speed when difficult operating conditions occur.

11. A wire erosion machine according to any of Claims 7 to 10, **characterized by** the fact that the first and/or second device (20, 30), the selection device (60) and/or the interpolator (70) is/are realized by implementation of corresponding computer programs in one or more computer devices.

**12.** A wire erosion machine according to any of Claims 8 to 11; **characterized by** the fact that the selection device (60) is so coupled to the second device (30) that the selection device (60) switches the drag error ($S_d$) produced by the first device (20) as soon as the sensor signal ($S_d$) satisfies certain criteria, in particular the reaching in each case of a predetermined limit value of the oscillations or variance or standard deviation, of the change per unit of time and/or of the absolute value of the sensor signal ($S_d$).

**13.** A method for moving guide heads (7, 8), possibly of a work piece (5) of a wire erosion machine along in each case a wire guide-path (TD), wherein

a) by means of a cutting wire (1) extending between the guide heads a contour is cut into the work piece (5), and

b) the actual drag error (S) produced by the bulging of the cutting wire (1) is compensated for in the manner that the existing wire guide-path (TD) is corrected with reference to a contour which is to be cut, which is represented by at least one contour curve (UK),

**characterized by** the fact that

c) for the correction of the existing wire guide path (TD) a drag error correction vector ($\vec{S}_B$) is calculated,

c1) the amount of which ($|\vec{S}_B(t)|$) is calculated from the instantaneous erosion parameters forming the basis of the erosion, and

c2) the direction of which is calculated as the angle ($\alpha(x)$) between the calculated drag error correction vector ($\vec{S}_B$) and the tangent to a point x of the contour curve (UK) from the instantaneous erosion parameters forming the basis of the erosion and/or from the geometry of the contour to be cut.

**14.** A method according to Claim 13, **characterized by** the fact that the amount ($|\vec{S}_B(t)|$) and/or the direction ($\alpha(x)$) of the calculated drag error correction vector ($\vec{S}_B$) is calculated from the erosion parameters erosion current (i(t)), erosion voltage (u(t)) and/or flushing pressure (p(t)).

**15.** A method according to Claim 13 or 14, **characterized by** the fact that the amount ($|\vec{S}_B(t)|$) of the calculated drag error correction vector ($\vec{S}_B$) is calcu-

lated from the instantaneous operating current i(t), the instantaneous erosion voltage u(t), and the instantaneous flushing pressure p(t) in accordance with the simplified formula

$$|\vec{S}_B(t)| = a * i(t) + b * p(t) + c * u(t) + d$$

in which a, b, c and d are factors which can be predetermined experimentally or arithmetically from fixed parameters of the wire erosion machine and the workpiece (5), particularly constant factors.

**16.** A method according to any of Claims 13 to 15, **characterized by** the fact that path elements of the contour curve (UK) are divided into segments and that for each new segment of successive segments of the length $\delta x$ the angle $\delta\alpha(x)$ is calculated in accordance with the formula:

$$\delta\alpha(x) = (\pm\, 1/r_0 - \alpha(x) / x_0) * \delta x,$$

in which x is the length of the next section to be cut, $x_0$ is a parameter which can be predetermined experimentally or arithmetically from fixed parameters of the wire erosion machine, and $1/r_0$ is the curvature of the contour curve, $r_0$ and $x_0$ being calculated upon passage from the previous path element to the present path element.

**17.** A method according to any of Claims 13 to 16, **characterized by** the fact that the angle ($\alpha(x)$) between the calculated drag error correction vector ($\vec{S}_B$) and the tangent at point x of the contour curve (UK), when the contour curve (UK) is a sequence of circular arcs, is calculated in approximation in accordance with the formula:

$$\alpha(x) = \alpha_0 + (\alpha_0 - \alpha_\infty) * \exp(-x/x_0)$$

in which $\alpha_0$ is the angle between the drag error correction vector ($\vec{S}_B$) and the tangent of the new cutting direction, and $\alpha_\infty$ is the asymptotic angle which is reached for $x \gg x_0$.

**18.** A method according to Claim 17, **characterized by** the fact that the parameter $x_0$ is determined from the relationship

$$\alpha_\infty = x_0/r_0.$$

**19.** A method according to any of Claims 13 to 18, **characterized by** the fact that

a) a drag error correction vector ($\vec{S}_G$) is deter-

mined by measuring the actual drag error (S) and

b) a drag error correction vector ($\vec{S}_B$; $\vec{S}_G$) or a combination of several drag error correction vectors ($\vec{S}_B$; $\vec{S}_G$) is selected.

20. A method according to Claim 19, **characterized by** the fact that the relative position of the cutting wire (1) with respect to the guide heads (7, 8) is determined by measurement and at least one corresponding sensor signal ($S_d$) is produced.

21. A method according to Claim 19 or 20, **characterized by** the fact that in each case the corrected path of the wire guides is determined by means of the selected drag error correction vector ($\vec{S}_B$; $\vec{S}_G$) or the selected combination of drag error correction vectors ($\vec{S}_B$; $\vec{S}_G$) and/or the geometry of the contour curve (UK).

22. A method according to any of Claims 13 to 21, **characterized by** the fact that the cutting speed is reduced when difficult operating conditions occur.

23. A method according to any of Claims 20 to 22, **characterized by** the fact that the calculated drag error correction vector ($\vec{S}_B$) is selected when the sensor signal ($S_d$) satisfies certain criteria, in particular the reaching in each case of a predetermined limit value of the oscillations or variance or standard deviation, of the change per unit of time, and/or of the absolute value of the sensor signal ($S_d$).

## Revendications

1. Machine d'électro-érosion à fil avec :

a) un fil de coupe (1) guidé entre deux têtes de guidage (7, 8), et opérant en tant qu'électrode d'érosion,
b) un dispositif de commande (90) destiné à exécuter des déplacements des têtes de guidage (7, 8), le cas échéant d'une pièce à usiner (5), à chaque fois le long d'une trajectoire de guidage du fil (TD) de manière telle qu'il soit possible de découper un contour dans la pièce à usiner (5), et
c) un premier dispositif (20) qui est conçu de manière telle qu'il compense l'erreur de poursuite réelle (S), produite par le bombement du fil de coupe (1), en corrigeant la trajectoire courante de guidage du fil (TD) par rapport à un contour à découper représenté au moins par une courbe de profil (UK),
    **caractérisée en ce que**
d) le premier dispositif (20) est conçu de manière telle qu'il calcule un vecteur de correction d'erreur de poursuite ($\vec{S}_B$) pour corriger la trajectoire courante de guidage du fil (TD), moyennant quoi il calcule

d1) la valeur du vecteur ($|\overrightarrow{S_B(t)}|$) à partir des paramètres d'érosion momentanés basés sur l'érosion et
d2) la direction du vecteur sous forme d'un angle ($\alpha(x)$) entre le vecteur de correction d'erreur de poursuite ($\vec{S}_B$) calculé et la tangente en un point x de la courbe de profil (UK), à partir des paramètres d'érosion momentanés basés sur l'érosion et/ou à partir de la géométrie du contour à découper.

2. Machine d'électro-érosion à fil selon la revendication 1, **caractérisée en ce que** la valeur ($|\overrightarrow{S_B(t)}|$) et/ou la direction ($\alpha(x)$) du vecteur de correction d'erreur de poursuite ($\vec{S}_B$) calculé est calculée à partir des paramètres d'érosion : le courant d'érosion ($i(t)$), la tension d'érosion ($u(t)$) et/ou la pression de balayage ($p(t)$).

3. Machine d'électro-érosion à fil selon la revendication 1 ou 2, **caractérisée en ce que** le premier dispositif (20) est conçu de manière telle qu'il calcule la valeur du vecteur de correction d'erreur de poursuite ($\vec{S}_B$) calculé à partir du courant de travail momentané $i(t)$, de la tension d'érosion momentanée $u(t)$ et de la pression de balayage momentanée $p(t)$ selon la formule simplifiée :

$$|\overrightarrow{S_B(t)}| = a * i(t) + b * p(t) + c * u(t) + d,$$

où a, b, c et d sont des facteurs, en particulier constants, prédéterminables par expérimentation ou par calcul à partir de paramètres fixes de la machine d'électro-érosion à fil et de la pièce à usiner (5).

4. Machine d'électro-érosion à fil selon l'une quelconque des précédentes revendications, **caractérisée en ce que** le premier dispositif (20) est conçu de manière telle qu'il répartisse des éléments de trajectoire de la courbe de profil (UK) en des segments et qu'il calcule l'angle $\delta\alpha(x)$ pour chaque nouveau segment des segments successifs de la longueur $\delta x$ selon la formule :

$$\delta\alpha(x) = (\pm\ 1/r_0 - \alpha(x)\ /\ x_0)\ *\ \delta x$$

où x est la longueur courante de la prochaine section à découper, $x_0$ est un paramètre prédéterminable par expérimentation ou calcul à partir de paramètres fixes de la machine d'électro-érosion à

fil et $1/r_0$ est la courbure de la courbe de profil, $r_0$ et $x_0$ étant calculés lors du passage de l'élément de trajectoire précédent à l'élément de trajectoire courant.

5. Machine d'électro-érosion à fil selon l'une quelconque des précédentes revendications, **caractérisée en ce que** le premier dispositif (20) est conçu de manière telle que, lorsque la courbe de profil (UK) est une suite d'arcs de cercle, il calcule l'angle ($\alpha(x)$) entre le vecteur de correction d'erreur de poursuite calculé ($\vec{S}_B$) et la tangente au point de la courbe de profil (UK), et pour préciser par approximation selon la formule :

$$\alpha(x) = \alpha_0 + (\alpha_0 - \alpha_\infty) * \exp(-x/x_0),$$

où $\alpha_0$ est l'angle entre le vecteur de correction d'erreur de poursuite ($\vec{S}_B$) et la tangente de la nouvelle direction de coupe et $\alpha_\infty$ est l'angle asymptotique qui est atteint pour x tendant vers $x_0$.

6. Machine d'électro-érosion à fil selon la revendication 5, **caractérisée en ce que** le premier dispositif (20) est conçu de manière telle qu'il détermine le paramètre $x_0$ à partir de la relation

$$\alpha_\infty = x_0/r_0$$

7. Machine d'électro-érosion à fil selon l'une quelconque des revendications précédentes, **caractérisée par**

a) un deuxième dispositif (30) destiné à déterminer un vecteur de correction d'erreur de poursuite ($\vec{S}_G$) à partir d'une mesure de l'erreur de poursuite réelle (S) et
b) un dispositif de sélection (60) destiné à sélectionner un vecteur de correction d'erreur de poursuite ($\vec{S}_B$; $\vec{S}_G$) d'un dispositif (20; 30) ou d'une combinaison de vecteurs de correction d'erreur de poursuite de plusieurs dispositifs (20, 30).

8. Machine d'électro-érosion à fil selon la revendication 7, **caractérisée en ce que** le deuxième dispositif (30) présente un système de capteur (13; 30) destiné à déterminer la position relative du fil de coupe (1) par rapport aux têtes de guidage (7, 8) et destiné à générer au moins un signal de capteur correspondant ($S_d$).

9. Machine d'électro-érosion à fil selon la revendication 7 ou 8, **caractérisée en ce que**

a) le dispositif de sélection (60) délivre à un interpolateur (70) un vecteur de correction d'erreur de poursuite sélectionné ($\vec{S}_A$) et
b) l'interpolateur (70) détermine à chaque fois grâce à cette erreur de poursuite ($\vec{S}_A$) et/ou la géométrie de la courbe de profil 1 (UK) la trajectoire corrigée des guide-fils.

10. Machine d'électro-érosion à fil selon l'une quelconque des revendications précédentes, **caractérisée par** une commande numérique (40) qui réduit la vitesse de coupe en cas d'apparition de conditions d'usinage difficiles.

11. Machine d'électro-érosion à fil selon l'une quelconque des revendication 7 à 10, **caractérisée en ce que** le premier et/ou le deuxième dispositif (20, 30), le dispositif de sélection (60) et/ou l'interpolateur (70) est/sont réalisé(s) en implémentant des programmes de calcul correspondants dans un ou plusieurs systèmes de calcul.

12. Machine d'électro-érosion à fil selon l'une quelconque des revendications 8 à 11, **caractérisée en ce que** le dispositif de sélection (60) est couplé au deuxième dispositif (30) de manière telle que le dispositif de sélection (60) enclenche l'erreur de poursuite ($S_B$) générée par le premier dispositif (20) dès que le signal de capteur ($S_d$) satisfait certains critères, en particulier le fait d'atteindre à chaque fois une valeur limite prédéfinie des oscillations respectivement de la variance ou d'un écart standard, la variation par unité de temps et/ou la valeur absolue du signal de capteur ($S_d$).

13. Méthode destinée à déplacer des têtes de guidage (7, 8), le cas échéant une pièce à usiner (5), d'une machine d'électro-érosion à fil à chaque fois le long d'une trajectoire de guidage du fil (TD), moyennant quoi

a) un contour est découpé dans la pièce à usiner (5) au moyen d'un fil de coupe (1) passant entre les têtes de guidage et
b) l'erreur de poursuite réelle (S) produite par le bombement du fil de coupe (1) est compensée par le fait que la trajectoire de guidage du fil respective (TD) est corrigée par rapport à un contour à découper représenté par au moins une courbe de profil (UK),
        **caractérisée en ce que**
c) pour corriger la trajectoire de guidage du fil respective (TD) on calcule un vecteur de correction d'erreur de poursuite ($\vec{S}_B$)

c1) dont la valeur $|\overrightarrow{S_B(t)}|$ est calculée à partir des paramètres d'érosion momentanés basés sur l'érosion et
c2) dont la direction, sous forme de l'angle

($\alpha(x)$) entre le vecteur de correction d'erreur de poursuite calculé ($\vec{S}_B$) et la tangente en un point x de la courbe de profil (UK), est calculée à partir des paramètres d'érosion momentanés basés sur l'érosion et/ou à partir de la géométrie du contour à découper.

**14.** Méthode, selon la revendication 13, **caractérisée en ce que** la valeur($|\vec{S}_B(t)|$) et/ou la direction ($\alpha(x)$) du vecteur de correction d'erreur de poursuite ($\vec{S}_B$) calculé est calculée à partir des paramètres d'érosion : le courant d'érosion ($i(t)$), la tension d'érosion ($u(t)$) et/ou la pression de balayage ($p(t)$).

**15.** Méthode selon la revendication 13 ou 14, **caractérisée en ce que** la valeur ($|\overline{S_B(t)}|$) du vecteur de correction d'erreur de poursuite calculé ($\vec{S}_B$) est calculée à partir du courant de travail momentané $i(t)$, de la tension d'érosion momentanée $u(t)$ et de la pression de balayage momentanée $p(t)$ selon la formule simplifiée :

$$|\overline{S_B(t)}| = a * i(t) + b * p(t) + c * u(t) + d,$$

où a, b, c et d sont des facteurs, en particulier constants, prédéterminables par expérimentation ou par calcul à partir de paramètres fixes de la machine d'électro-érosion à fil et de la pièce à usiner (5).

**16.** Méthode selon l'une quelconque des revendications 13 à 15, **caractérisée en ce que** des éléments de trajectoire de la courbe de profil (UK) sont répartis en des segments et que, pour chaque nouveau segment des segments successifs de la longueur $\delta x$, l'angle $\delta\alpha(x)$ est calculé selon la formule :

$$\delta\alpha(x) = (\pm 1/r_0 - \alpha(x) / x_0) * \delta x$$

où x est la longueur courante de la prochaine section à découper, $x_0$ est un paramètre prédéterminable par expérimentation ou calcul à partir de paramètres fixes de la machine d'électro-érosion à fil et $1/r_0$ est la courbure de la courbe de profil, $r_0$ et $x_0$ étant calculés lors du passage de l'élément de trajectoire précédent à l'élément de trajectoire courant.

**17.** Méthode selon l'une quelconque des revendications 13 à 16, **caractérisée en ce que**, lorsque la courbe de profil (UK) est une suite d'arcs de cercle, l'angle ($\alpha(x)$) entre le vecteur de correction d'erreur de poursuite calculé ($\vec{S}_B$) et la tangente au point x de la courbe de profil (UK) est calculé par approximation selon la formule :

$$\alpha(x) = \alpha_0 + (\alpha_0 - \alpha_\infty) * \exp(-x/x_0)$$

où $\alpha_0$ est l'angle entre le vecteur de correction d'erreur de poursuite ($\vec{S}_B$) et la tangente de la nouvelle direction de coupe et $\alpha_\infty$ est l'angle asymptotique qui est atteint pour x tendant vers $x_0$.

**18.** Méthode selon la revendication 17, **caractérisée en ce que** le paramètre $x_0$ est déterminé par la relation

$$\alpha_\infty = x_0 / r_0$$

**19.** Méthode selon l'une quelconque des revendications 13 à 18, **caractérisée en ce que**

a) un vecteur de correction d'erreur de poursuite ($\vec{S}_G$) est déterminé en mesurant l'erreur de poursuite réelle (S) et
b) un vecteur de correction d'erreur de poursuite ($\vec{S}_B$; $\vec{S}_G$) ou une combinaison de plusieurs vecteurs de correction d'erreur de poursuite ($\vec{S}_B$, $\vec{S}_G$) est sélectionné.

**20.** Méthode selon la revendication 19, **caractérisée en ce que** la position relative du fil de coupe (1) par rapport aux têtes de guidage (7, 8) est déterminée par mesure et qu'au moins un signal de capteur ($S_d$) correspondant est généré.

**21.** Méthode selon la revendication 19 ou 20, **caractérisée en ce que** l'on détermine à chaque fois la trajectoire corrigée des guide-fils au moyen du vecteur de correction d'erreur de poursuite sélectionné ($\vec{S}_B$; $\vec{S}_G$) respectivement de la combinaison sélectionnée de vecteurs de correction d'erreur ($\vec{S}_B$, $\vec{S}_G$) et/ou de la géométrie de la courbe de profil (UK).

**22.** Méthode selon l'une quelconque des revendications 13 à 21, **caractérisée en ce que** la vitesse de coupe est réduite en cas d'apparition de conditions d'usinage difficiles.

**23.** Méthode selon l'une quelconque des revendications 20 à 22, **caractérisée en ce que** le vecteur de correction d'erreur de poursuite calculé ($\vec{S}_B$) est sélectionné, lorsque le signal de capteur ($S_d$) satisfait certains critères, en particulier le fait d'atteindre à chaque fois une valeur limite prédéfinie des oscillations respectivement de la variance ou d'un écart standard, la variation par unité de temps et/ou la valeur absolue du signal de capteur ($S_d$).

FIG.1

p(t)
u(t)
i(t)

FIG.2

FIG. 3

FIG. 4

FIG.3b

Bahnelement 4

Bahnelement 2

UK

Segment im
Bahnelement 1

Bahnelement 3

FIG3a

Bahnelement 1

EP 0 801 341 B1

FIG.5